# EUROPEAN PATENT SPECIFICATION

(11) **EP 2 852 097 B1**
(45) Date of publication and mention of the grant of the patent: **10.08.2016**
(21) Application number: 13185462.2
(22) Date of filing: 20.09.2013
(51) Int. Cl.: H04L 12/26, H04L 12/801

(54) **Efficient data center monitoring**
Effiziente Datencenterüberwachung
Surveillance de centre informatique efficace

(43) Date of publication of application: 25.03.2015
(73) Proprietor: CoScale NV, 9000 Gent (BE)
(72) Inventor: Ryckbosch, Frederick, 9070 Destelbergen (BE); Polfliet, Stijn, 9170 Sint-Pauwels (BE)
(74) Representative: Wauters, Davy Erik Angelo

(56) References cited:
- WO-A1-2012/100404
- US-A1- 2006 287 948
- US-A1- 2007 266 149
- US-A1- 2009 216 874
- US-A1- 2010 106 538
- OBRACZKA K ET AL: "NETWORK LATENCY METRICS FOR SERVER PROXIMITY", GLOBECOM'00. 2000 IEEE GLOBAL TELECOMMUNICATIONS CONFERENCE. SAN FRANCISCO, CA, NOV. 27 - DEC. 1, 2000; [IEEE GLOBAL TELECOMMUNICATIONS CONFERENCE], NEW YORK, NY : IEEE, US, vol. 1, 27 November 2000 (2000-11-27), pages 421-427, XP001195601, ISBN: 978-0-7803-6452-3

## Description

### Field of the invention

The invention relates to the field of data center monitoring. More specifically it relates to a system and method for monitoring the network traffic and load in a data center.

### Background of the invention

The increased exchange of information through telecommunication networks has led to an increased load in data centers. Heavy requirements are put on the data centers with regard to speed in data retrieval, availability of the data center services, security, and data volumes. These requirements are reflected in service level agreements. Existing monitoring solutions either focus on the application layer or the platform layer. In particular, monitoring solutions at the application layer, such as Google Analytics and Crazy Egg, figure out which part(s) of the application are of most interest to end users.

Monitoring at the platform layer tracks server and network load and/or power consumption, see for example Zabbix, Nagios, Hyperic (VMware), etc.

Document WO 2012100404 discloses providing service specific resource usage information about resources of a network node consumed by a specific service by instructing said network node to provide service specific resource usage information for a specific service; processing incoming data traffic by said network node to identify data packets belonging to said specific service; performing a correlation between the consumed network resources of said network node and the data packets of the specific service to derive service specific resource usage data; and reporting the derived service specific usage data by said network node.

US 1822453 B2 (IBM) discloses a method and system for managing resources in a data center. This patent monitors current application behavior and resource usage, makes a prediction about future application requirements and performance, and makes changes to the application environment to meet a given performance level.

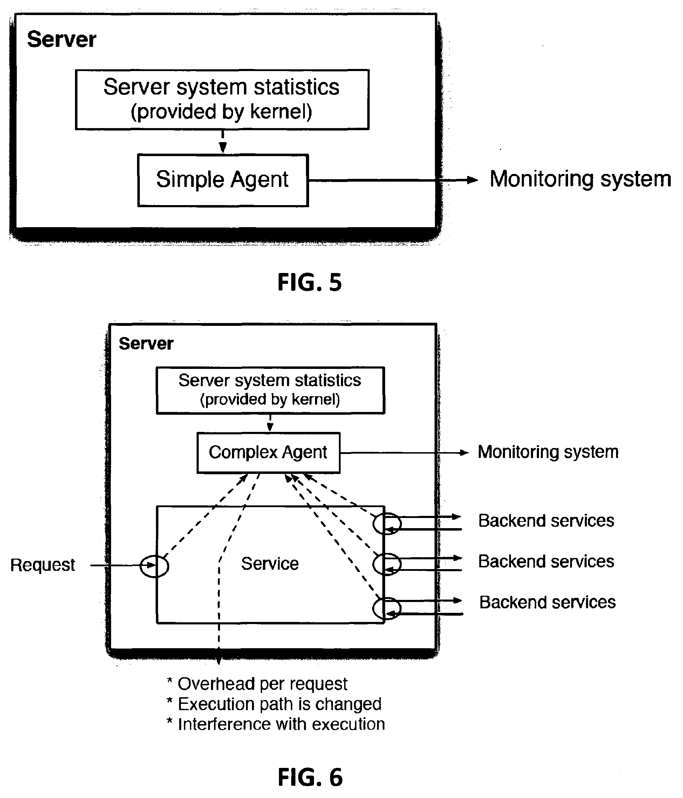

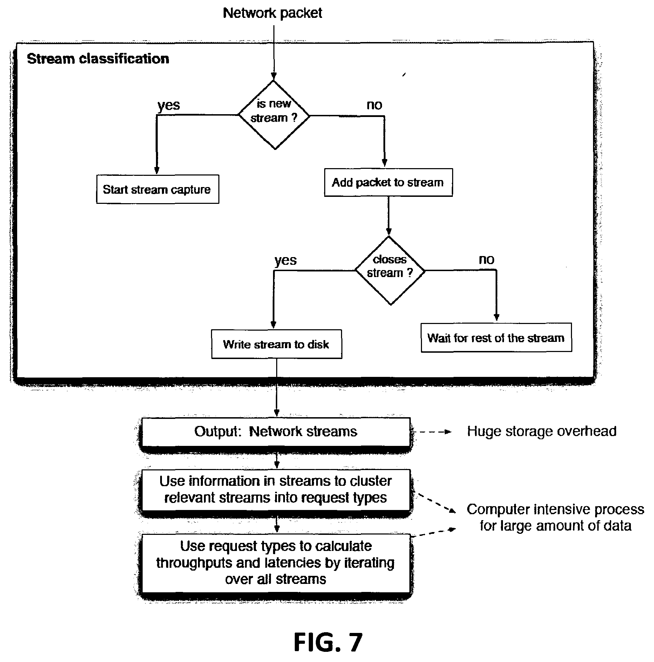

Two typical prior art monitoring solutions are illustrated in FIG. 6 and FIG. 7.

FIG. 6 illustrates a prior art monitoring solution. On each server in the data center a complex agent is implemented for monitoring purposes. The problems with this kind of solutions are that they impose an overhead per request, that the execution path is changed and that the monitoring interferes with the normal execution in a data center.

FIG. 7 illustrates data analysis steps for a prior art monitoring solution. In this solution all data packets are streamed to disk requiring a huge storage overhead and a computer intensive processing on a large amount of data.

Therefore, there is still room for improvement in data center monitoring systems that identify whether service level agreements are met and that can identify eventual bottlenecks in a data center and from which the results can hint towards possible architectural improvements of the data center.

### Summary of the invention

It is an object of embodiments of the present invention to provide good systems and methods for monitoring the load and efficiency of a data center.

It is an advantage of embodiments of the present invention that application-level monitoring information and platform-level monitoring information are coupled in an efficient way. This effectively leads to a holistic monitoring solution for a broad range of people, ranging from technicians, system administrators, business developers, marketeers, up to upper-management.

It is an advantage of embodiments according to the present invention that the packets are reduced in size. It is an advantage of embodiments of the current invention that only a very limited part of the packet information is retained. The packets containing strings, for example a host name, a url, are processed by the packet analyzer and stored as a request type being an integer number.

It is an advantage of embodiments of the present invention that the whole network stream is captured and analyzed, thus avoiding sampling which may result in inaccurate analysis being provided. In order to have a good or optimum correlation between network traffic and resource usage, it is important that the full network stream (e.g. incoming and outgoing traffic) is analyzed, as sampling may result in overlooking some events, whereby such events may correspond with critical events regarding network traffic and resource usage.

It is an advantage of an embodiment of the present invention that it enables intra-application monitoring. Meaning that the resource consumption can be shown for each request type defined in the embodiment according to the present invention. Such request types may correspond with different components in the application, thus allowing a more detailed analysis of the application resource use. This is as opposed to some other tools that typically cannot calculate the resource consumption for different request types and only show application-wide resource monitoring. In other words, it is an advantage of embodiments of the current invention that fine-grained performance and business level information monitoring inside an application (intra-application level) can be obtained. Through deep packet inspection it is possible to identify application level and intra-application level information. Therefore different type of requests and subsequent responses can be identified. Moreover it is possible to obtain accurate information on the load the individual requests/responses pose on the data center, providing useful information for optimizing the application or the way it is processed in the data center.

It is an advantage of embodiments of the current invention that no complex agent is required on each server. Typically, the complex agent processing the data and performing the analysis of the application level resource use, will be the agent that requires the largest efforts from e.g. system administrators for installing, updating and with respect to runtime overhead. According to embodiments of the present invention, no such complex agent needs to be installed on each server, but a simple agent can be used which is less demanding e.g. for installing/updating. The simple agent can be a built-in SNMP agent that comes with the operating system. In this way, installation/updating and runtime overhead can be reduced. Furthermore, system administrators typically may be reluctant to install additional software on production servers.

It is an advantage of embodiments of the present invention that it is not required to send monitoring information outside the data center, which improves scalability, energy consumption, data protection and/or decreases security issues.

It is an advantage of embodiments of the present invention that system administrators and technicians can use the monitoring information to understand how request latency (and user satisfaction) relates to resource needs in the data center. Business developers will find the monitoring solution valuable to understand how application features relate to cost and revenue.

It is an advantage of embodiments of the current invention that the solutions are scalable towards an increasing size of the data center both with regard to the number of servers in the data center as with regard to the amount of network traffic in the data center. In embodiments according to the present invention it was possible to monitor 260 servers using 1 monitoring server at 50% of its capacity. Existing monitoring systems that use complex agents have an overhead between 1 and 10% on each monitored server. Embodiment of the present invention can thus result in a far more efficient system.

The above objective is accomplished by a method and device according to the present invention.

The present invention relates to a system for monitoring network traffic and resource usage in a data center, the system comprising a node comprising an input means for capturing network packets, a processing means for running a packet analyzer for analyzing the network packets whereby packets are classified in request/response pairs per type based on deep packet inspection, and a memory for storing the request/response pairs,
a means for collecting the request/response pairs and for receiving resource usage information from at least one server, and a correlation module for correlating the request/response pairs information with the resource usage. The correlation module may be comprised in the one or more processing means.

The input means may capture substantially all network packets of the network traffic and said substantially all network packets may be processed by the packet analyzer. The network packets first may be filtered based on packet information and the packet analyzer only processes the filtered packets.

Only the HTTP packets may be passing through the filter, filtering on the TCP port data, and the packet analyzer may parse URL and host information from the filtered packets. Response times of several request of the same type may be combined in a latency histogram.

The packet analyzer may process the packets in order of arrival.

The packet analyzer may process the packets classifying them according to user defined request types.

Data in the packets may be aggregated by the system.

The packet analyzer may store only 10-100 requests per second per request type completely for retrieving full url and host information.

The system furthermore may comprise a monitoring unit for displaying the data center load versus request/response pair rate.

The system may be implemented as a computing device.

The system may be implemented as an application.

The present invention also relates to a method for monitoring network traffic and resource usage in a data center, the method comprising the following steps, capturing network packets entering or leaving the data center by an input means of a node,
analyzing of the network packets by a packet analyzer running on a processing means whereby the network packets are classified in request/response pairs per type and this based on deep packet inspection,
obtaining resource usage information of at least one server at a means for receiving resource usage information, e.g. at a central processing means,
correlating the request/response pairs information with the resource usage, e.g. on a central processing means.

In the capturing step all network packets may be captured, and whereby in the analyzing step all captured network packets may be analyzed.

The captured network packets may be filtered based on packet information and whereby the packet analyzer only processes the filtered packets.

Only the HTTP packets may be passing through the filter in the filter step, filtering on the TCP port data, and the packet analyzer may parse URL and host information from the filtered packets.

The method may include combining response times of several requests in a latency histogram.

In at least some of the steps the packets may be processed in order of arrival.

The present invention also relates to a data carrier comprising a set of instructions for, when executed on a computer, monitoring network traffic and resource usage in a data center according to a method as described above. The data carrier may be any of a CD-ROM, a DVD, a flexible disk or floppy disk, a tape, a memory chip, a processor or a computer.

Particular and preferred aspects of the invention are set out in the accompanying independent and dependent claims. Features from the dependent claims may be combined with features of the independent claims and with features of other dependent claims as appropriate and not merely as explicitly set out in the claims. These and other aspects of the invention will be apparent from and elucidated with reference to the embodiment(s) described hereinafter.

### Brief description of the drawings

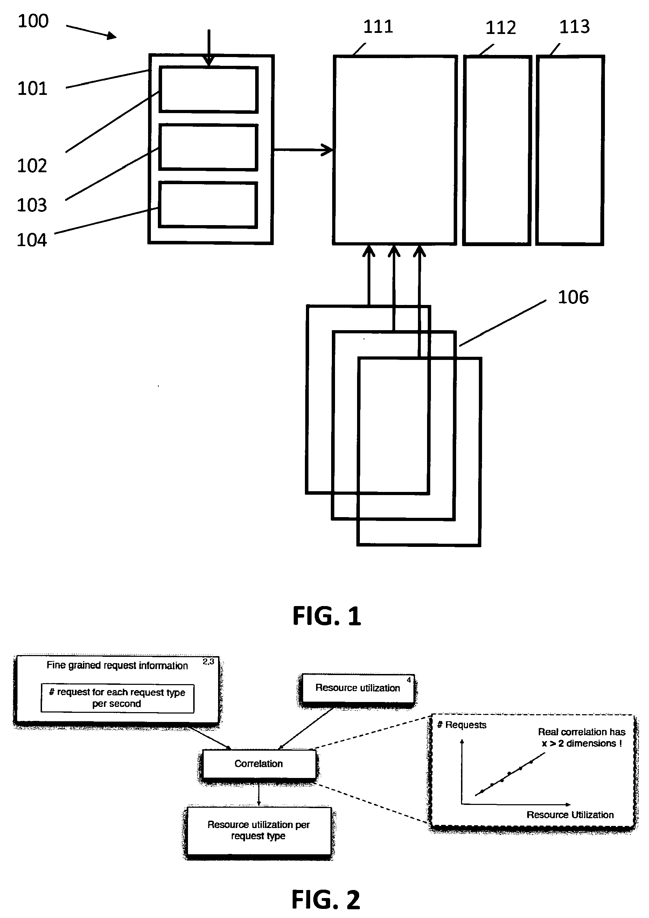

FIG. 1 gives a schematic overview of a system for monitoring network traffic and resource usage of a data center according to an embodiment of the present invention.
FIG. 2 gives a schematic overview of the data components required for the correlation module to operate according to an exemplary embodiment of the present invention.

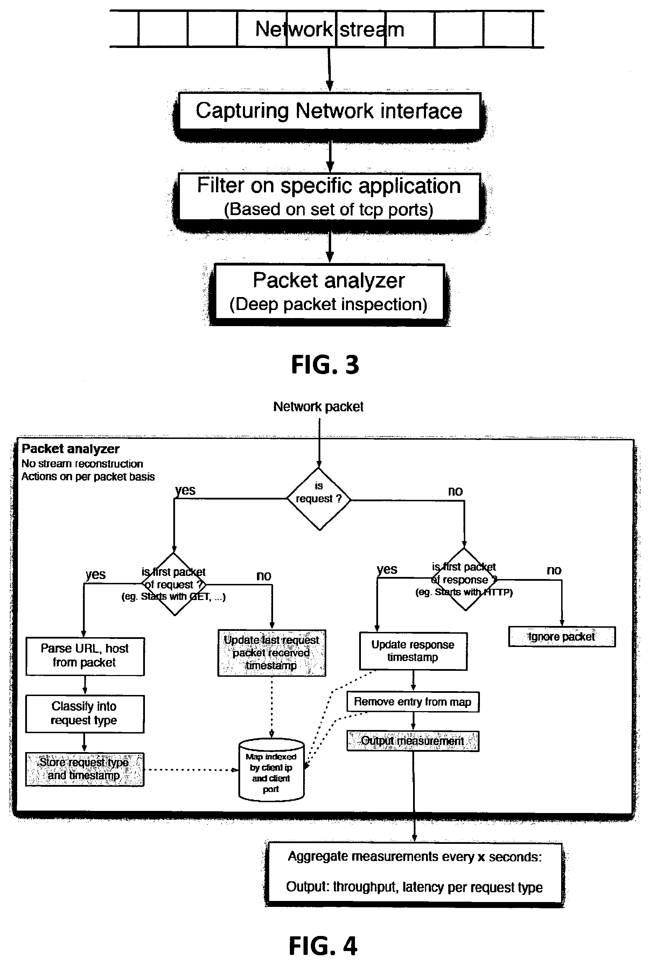

FIG. 3 schematically illustrates a network stream captured by an input means (the capturing network interface) and the processing afterwards, according to an exemplary embodiment of the present invention.
FIG. 4 schematically illustrates packet processing according to an embodiment of the present invention.
FIG. 5 illustrates a simple agent on a server for transferring server system statistics.
FIG. 6 illustrates a complex agent running on a server according to a prior art solution for data center monitoring.
FIG. 7 illustrates processing of a network packet stream according to a prior art solution for data center monitoring.

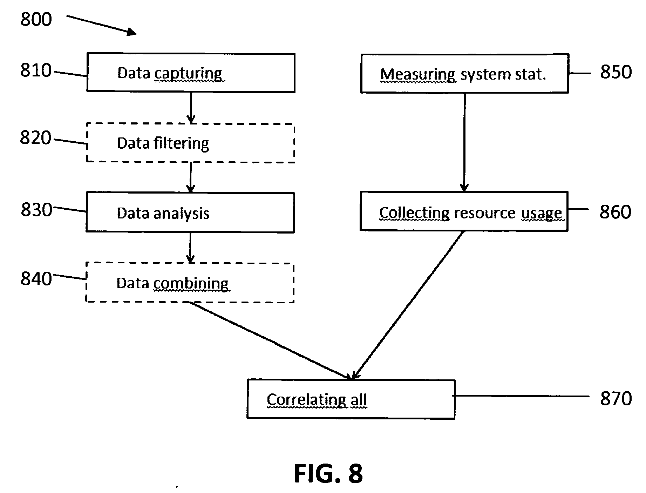

FIG. 8 illustrates a method for monitoring network traffic and resource usage in a data center according to an embodiment of the present invention.

The drawings are only schematic and are non-limiting. In the drawings, the size of some of the elements may be exaggerated and not drawn on scale for illustrative purposes.

Any reference signs in the claims shall not be construed as limiting the scope.

In the different drawings, the same reference signs refer to the same or analogous elements.

### Detailed description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

Where in embodiments of the present invention reference is made to an application, reference is made to a functionality (or a set of functionalities) exposed to a user that can be accessed from a network. Where in embodiments of the present invention reference is made to a request, reference is made to a network packet received from a user that asks to the application to perform an action. Where in embodiments of the present invention reference is made to a response, reference is made to a network packet send to the user containing the result of the action in the application. Where in embodiments of the present invention reference is made to a request type, reference is made to a specific functionality or action of the application, defined by the fields in a request.

Where in embodiments of the present invention reference is made to deep packet inspection, reference is made to the act of gathering information about a network packet by inspecting the full packet and reconstructing protocols thereof. It relates to the analysis of transportation packets whereby the data of the packet is inspected. Such data may comprise application level data, thus identifying somehow aspects of the application that used. For example within an http application the packets can be subdivided into requests and responses whereby the requests and responses can be even further subdivided in types, a response of a certain type corresponding with a request of the same type. The requests and responses typically may be correlated to features of the application or defined criteria about an application.

Where in embodiments of the present invention reference is made to network traffic, reference can be made to an amount and/or a type of traffic on a particular network. Monitoring network traffic may include monitoring bandwidth management of a network.

Where in embodiments of the present invention reference is made to resource utilization, reference is made to the usage of resources e.g. CPU, disk space, memory, network, etc. on a server.

Where in embodiments of the present invention reference is made to a simple agent, reference is made to an agent that periodically reads the kernel statistics about the resource usage of the machine.

Where in embodiments of the present invention reference is made to a complex agent, reference is made to an agent that periodically reads the kernel statistics about the resource usage of the machine, but also uses hooks or instrumentation to gather information about the services that run on the server.

Where in some embodiments of the present invention reference is made to a node, reference is made to a data equipment, e.g. active hardware or software device, attached to a network and capable of sending, receiving or forwarding information over a data channel. An example of a hardware device may be a host computer, such as for example a router, workstation or server. Such a hardware device may run some software or firmware. Alternatively, reference also can be made to a software device in a network, e.g. when considering a virtual machine.

In a first aspect, the present invention relates to a system for monitoring network traffic and resource usage in a data center, e.g. for a specific application. It thereby is an advantage of embodiments of the present invention that for applications, it can be determined whether latency problems are caused by network traffic issues and/or resource usage issues, thus allowing to optimize the application or the way it is processed in the network and/or the data center. According to embodiments of the present invention, the system comprises a node comprising an input means for receiving or capturing network packets. The node furthermore comprises a processing means for running a packet analyzer for analyzing the network packets whereby packets are classified in request/response pairs per type based on deep packet inspection. Such request/response pairs may be combined with time stamps. They may be stored in a memory. The system also comprises a means for collecting the request/response pairs and for receiving resource usage information from at least one node. The at least one node may therefore be equipped with a simple agent adapted for providing resource usage information to the means for receiving usage information, e.g. a central processing means. The system furthermore comprises a correlation module for correlating the request/response pairs information with the resource usage. The system according to embodiments of the present invention may be hardware or software implemented.

By way of illustration, embodiments of the present invention not being limited thereto, an exemplary system according to particular embodiments will now be described with reference to FIG. 1 to FIG. 5, showing standard and optional features of such systems.
According to embodiments of the current invention the system 100 comprises a node 101. The node comprising an input means 102 for capturing network packets. Client requests enter the data center at the load balancer. In embodiments according to the present invention all network traffic is duplicated to the node 101 comprising the input means 102. In embodiments according to the present, typically the node 101 may comprise a network interface that receives the data send and received by the load balancer. The load balancer thereby typically may be a separate node, for which the network interface is mirrored to the network interface on node 101.
The same node 101 also comprises a processing means 103 for running a packet analyzer for analyzing the network packets whereby packets are classified in request/response pairs per type based on deep packet inspection and whereby the request/response pairs together with time stamps are stored. An example of such a packet analyzer is described later with reference to FIG. 4. A time stamp advantageously can be recorded for the last packet of a certain request and another time stamp may be recorded for the first packet of the response on the concerning request. The delay between both is typically referred to as the response time of the data center on that specific request type under the specific load conditions.
According to embodiments of the current invention the system 100 also comprises a means 111, e.g. an element comprising processing power, for receiving resource usage information from at least one server. Such a server may be considered part of the system or alternatively, the system may be adapted for receiving information therefrom. The means 111 for receiving resource usage information may be part of a central processing means. It may be referred to as an external monitoring system. Such a processing means may be the same as the processing means 103 for collecting the request/response pairs through the packet analyzer, although the latter is not strictly necessary. The at least one server 106 from which the information may be received typically may be running a simple agent for transferring resource usage towards the element for receiving resource usage information. The simple agent may be considered part of the system 100, or the system 100 may be adapted for receiving information from the simple agent. FIG. 5 schematically illustrates the functionality required on such a server 106 for monitoring the server system statistics. The kernel provides an interface for collecting the server system statistics and an additional simple agent is required for transferring the system statistics towards the monitoring system e.g. the element for receiving resource usage information. It is an advantage of embodiments of the present invention that only a simple agent needs to be run at the server level, the simple agent almost not increasing the load on the server.
The system also comprises a correlation module 112, e.g. running at the node 101, for correlating the request/response pairs information with the resource usage. It typically may run together with the packet analyzer and typically may run independent of the resource monitoring system 111.
In order to support high request rates, advantageously only very fast packet inspection is used. This makes the traffic analysis scale to high request rates. During analysis, the data thereby advantageously is immediately classified and stored in an efficient way. A data storage 113 may be provided.
FIG. 3 schematically illustrates a network stream captured by an input means 102 (the capturing network interface). Before being analyzed through deep packet inspection by the packet analyzer, the packets coming from the network stream can be filtered based on parameters in the transport layer. For example, as illustrated in FIG. 3, filtering could be applied based on a set of tcp ports. After filtering, the packet analyzer performs deep packet inspection on the filtered packets as is illustrated in FIG. 3 according to an exemplary embodiment of the current invention.
FIG. 4 illustrates an exemplary implementation of the packet analyzer, running in the processing means 103, according to the present invention. In a first step packets are divided into request and response packets. If a network packet is a request packet, it is examined whether the packet is the first packet of the request (e.g. starts with GET, HEAD, POST, PUT, DELETE, TRACE, OPTIONS, CONNECT, PATCH, etc.). In that case the URL and host are parsed from the packed data and the packet is classified into a request type. Next, the request type and timestamp are identified. These can e.g. stored in the memory 104 comprised in the node 101, together with the request. The map in which the request type and timestamp are stored is indexed by client ip and client port according to an exemplary embodiment of the current invention. In case the request packet is not the first packet of the request, the timestamp of the request can be modified to the moment the last packet of the request was received.
In case the network packet was a response, it is verified whether the request was the first packet of the response (e.g. starts with HTTP). If so the time stamp of the response is updated. Next the entry is removed from the map and transmitted to the element for receiving resource usage information or a processing element. The element or a processing element aggregates these results every predetermined period, e.g. every x seconds, whereby x is in the range between 1s and 300s preferably between 1s and 60s. The result is a throughput and a latency per request type. In case the packet is not the first packet of the response, the packet is ignored. Gathering only limited information allows for great reduction in storage capacity for storing such information. In one particular example, embodiments of the present invention not being limited thereto, only the URL and hostname is stored in the first step. This is typically sized less than 200 bytes. Assuming an http page of about 5kbytes, this means a 25 times reduction of data in the step. Using aggregation, eventually only a fixed amount of data (e.g. latency and bandwidth corresponding with about 40 bytes) is stored, independent of the amount of traffic being e.g. 1kb/sec or 1Gb/sec. A memory 104 providing this storage capacity for storing the request/response pairs may be comprised by the node 101 mentioned before.
In embodiments according to the present invention, to quantify user perceived performance, response times of all requests are measured. Response time data of several requests can be combined into an efficient data structure, called a latency histogram, and such information may be outputted to the user. The latency histogram is stored may be store in the memory 104 in the node 101 or in the central processing means- if it does not form part of the node 101.

The packet analyzer processes the packets entering or leaving the data center. It is an advantage of embodiments according to the present invention that a high throughput of network packets can be analyzed while keeping the required information.

In order to achieve this, embodiments of the current invention typically may limit the analysis of the network packets by the packet analyzer. One example thereof may be analyzing the network packets taking into account one or more, preferably all of the following principles:
- Packets are processed in order of arrival and no packet reordening or reconstruction is done.
- The bytes or data in a packet are only parsed partially looking for the required fields. In an exemplary embodiment of the current invention packets are filtered based on the network service defined by the TCP port number in the TCP header. For example by only parsing on the TCP port number only HTTP messages can be retained.
- In yet another, or the same, exemplary embodiment of the current invention the application header is parsed for required fields. For example in case of the HTTP protocol, the application header is parsed for URL and host information.
- The URL or host information might be present in a following packet in the stream (identified by the TCP port). The stream (identified by the TCP port) can be marked and the following packets in the stream can be analyzed, to look for this information.

Two caveats might exist. Firstly, the packet with host arrives before the beginning of the same request, but as we are on a LAN, the chances are small for this to happen.

Secondly, the host information is spread over 2 packets. Since hostnames are short compared to packet sizes, the chances are small for this to happen. In both cases the information will be lost.

Moreover in order to be able to analyse networks packets at a high throughput, the storage needs, which need to be foreseen by the memory 104 in the node 101, are reduced to a minimum by following steps :
- Predefining the request types. The can be done by the user at the beginning of the data centre analysis.
- Classifying the packets as a request type immediately upon arrival of the packet. This results in a large compression of the amount of data, namely from strings (hostname, url) to integer.
- Storing request rates, latencies and error rates in a configurable interval, advantageously a short interval such as for example every 10 seconds. The data may be saved to disk. This data includes e.g. the latency histograms and bandwidths for each request type. Based on this no storage is required per network packet reducing the overall storage needs.
   Moreover in order to assist in analysing networks packets at a high throughput, optionally, the full URL and host information may be gathered using adaptive sampling. If for example an application receives 10 000 requests per second, storing all requests takes up too much space, and one could sample and save 10 requests per second with full information (on top of saving the latency histogram and bandwidth of the other requests). One can do this per request type, so the user has a complete example of a packet for each request type.
- For example only 10-100 requests per seconds are stored completely. Current request rate is used to determine the sampling rate.

According to embodiments of the present invention the network traffic and the resource usage for an application are both monitored. The input means 102 thereby captures all network packets (monitoring the network traffic). The input means 102 is illustrated in FIG. 3 as the capturing network interface. A simple agent on a server 106, illustrated in FIG. 4, transfers resource usage towards the element receiving the resource usage information (monitoring the resource usage).

Embodiments according to the present invention help understanding what is going on in the application by correlating the network information with the resource usage of all hardware components.

Said embodiments heavily rely on the network capturing by the node 101 comprising the input means 102 and the packet analyzer: this includes categorizing each request in a predefined request type and measuring the latency for each request-response pair. In embodiments according to the present invention the whole network stream is captured and analyzed as opposed to other inventions where only a limited set is 'sampled'. It is an advantage of embodiments of the current invention that the embodiments are scalable to high throughput levels. Indeed embodiments according to the present invention focus on large applications. Therefore embodiments according to the present invention identify, by means of the packet analyzer, the request type as soon as possible using the least amount of data and packet reconstruction.

Embodiments according to the present invention enable the correlation between the network traffic and the resource usage since a full analysis of the incoming and outgoing traffic to the application is done by the packet analyzer. This requires a non-sampled, fast and accurate network analysis at the application level. As opposed to the prior art, the current invention differs from other network capturing tools because embodiments of the current invention apply deep packet inspection, don't reconstruct TCP streams and immediately categorize the stream in a predefined request type. The correlation module relates the network traffic with the resource usage.

The correlation module, which may be running on a processing means, correlates the resource usage with the fine-grained request information to determine how many resources each type of request uses. Both sets of data are aligned in time and linear regression is used to determine the component of each request type in the resource usage. The system therefore also may comprise an output means for outputting the obtained results.

FIG. 2 gives a schematic overview of the data components required for the correlation module to operate according to an exemplary embodiment of the current invention. The fine-grained request information giving the number of requests for each request type per second is information coming from the packet analyzer.

The resource usage is information coming from the at least one server 106 running a simple agent for transferring resource usage towards a means for receiving resource usage, e.g. a central processing means.

Both the fine grained request information as well as the resource utilization are time stamped allowing the correlation module to correlate them. By way of illustration the graph in FIG. 2 shows the relationship between the number of requests and the resource utilization. In the illustrative graph only 2 dimensions are shown, however a real correlation shows at least 2 and may show more dimensions.

In certain embodiments according to the present invention, the system comprises an interface for visualizing the measurement results. Moreover, by automatically aggregating data, the number of data points that are necessary to visualize a certain time period is kept within limits. The data can be aggregated in intervals. For example, 10 second data can be aggregated over 1 minute, 5 minutes, 15 minutes, 60 minutes, 3 hours, 6 hours, 12 hours, 24 hours. This way if a user is looking at data for a long period, one can use a higher interval (for instance 15 minutes instead of 10 seconds), thus limiting the number of data points shown. Finally, servers are grouped into logical groups for easier visualization of the data. The system may comprise an output means for outputting the obtained results.

In a second aspect, the present invention relates to a method for monitoring network traffic and resource usage in a data center. The method comprising the following steps of capturing network packets entering or leaving the data center by an input means of a node, analyzing of the network packets by a packet analyzer running on a processing means whereby the network packets are classified in request/response pairs per type and this based on deep packet inspection, obtaining resource usage information of at least one server at a means for receiving resource usage information, e.g. a central processing means, and correlating the request/response pairs information with the resource usage e.g. in a processing means. By way of illustration, embodiments of the present invention not being limited thereto, an exemplary method is shown in FIG. 8, illustrating standard and optional features of embodiments of the present invention. In a first step 810 the network packets entering or leaving the data center are captured by the input means 102 of node 101. In embodiments according to the present invention all network packets entering or leaving the data center can be captured by the input means 102, instead of sampling the network traffic.

In certain embodiments according to the present invention, a next step 820 is included. This step 820 filters the incoming packets using a filter based on the content of the packets. In an exemplary embodiment of the current invention the filtering is done based on the header of the packet, more specifically based on the overhead of the transport layer. For example the filtering can be done on a TCP port filtering out the HTTP messages.

In a next step 830 the data of the captured, eventually filtered, packets is analyzed through deep packet inspection. Thereby the packets can be assigned a user defined type and timestamp. In embodiments according to the present invention assigning a type to a network packet is based on application layer data. The types are user defined. By making the difference in time stamps between requests and responses of the same type, the response delay can be calculated.

In a next step 840 the data (request/response types and timestamps) can be combined in a latency histogram.

On the resource monitoring side, a first step 850, comprises the collection and transmission of the server system statistics by a simple agent towards the element for receiving resource usage information or a processing means. All this information is collected by a central processing means for further processing in step 850.

In step 870, according to embodiments of the current invention, the fine grained request information as well as the resource utilization are correlated. This allows to correlate the network traffic with the resource usage even down to an intra-application message level.

The above described system embodiments for monitoring network traffic and resource usage in a data center may correspond with an implementation of the method embodiments for monitoring network traffic and resource usage in a data center as a computer implemented invention in a processor. One configuration of such a processor may for example include at least one programmable computing component coupled to a memory subsystem that includes at least one form of memory, e.g., RAM, ROM, and so forth. It is to be noted that the computing component or computing components may be a general purpose, or a special purpose computing component, and may be for inclusion in a device, e.g., a chip that has other components that perform other functions. Thus, one or more aspects of the present invention can be implemented in digital electronic circuitry, or in computer hardware, firmware, software, or in combinations of them. For example, each of the method steps may be a computer implemented step. Thus, while a processor as such is prior art, a system that includes the instructions to implement aspects of the methods for monitoring network traffic and resource usage in a data center for a specific application is not prior art.

The present invention thus also includes a computer program product which provides the functionality of any of the methods according to the present invention when executed on a computing device.

In another aspect, the present invention relates to a data carrier for carrying a computer program product for monitoring network traffic and resource usage in a data center. Such a data carrier may comprise a computer program product tangibly embodied thereon and may carry machine-readable code for execution by a programmable processor. The present invention thus relates to a carrier medium carrying a computer program product that, when executed on computing means, provides instructions for executing any of the methods as described above. The term "carrier medium" refers to any medium that participates in providing instructions to a processor for execution. Such a medium may take many forms, including but not limited to, non-volatile media, and transmission media. Non-volatile media includes, for example, optical or magnetic disks, such as a storage device which is part of mass storage. Common forms of computer readable media include, a CD-ROM, a DVD, a flexible disk or floppy disk, a tape, a memory chip or cartridge or any other medium from which a computer can read. Various forms of computer readable media may be involved in carrying one or more sequences of one or more instructions to a processor for execution. The computer program product can also be transmitted via a carrier wave in a network, such as a LAN, a WAN or the Internet. Transmission media can take the form of acoustic or light waves, such as those generated during radio wave and infrared data communications. Transmission media include coaxial cables, copper wire and fibre optics, including the wires that comprise a bus within a computer. Method embodiments of the present invention also may be implemented as an application that can be run. Such an application may be presented via a user interface, e.g. a graphical user interface, and may provide the user with output indicative of the network traffic and resource usage, with respect to a particular other application run. The output may comprise latency information.

The present invention furthermore relates to a datacenter embedded in a network, the datacenter comprising a system for monitoring network traffic and resource usage of the datacenter, e.g. with respect to a particular application or parts thereof run on the datacenter and in the network. The system thereby corresponds with a system as described in the first aspect of the present invention.

## Claims

1. A system (100) for monitoring network traffic and resource usage in a data center comprising at least one server, the system comprising:
- a node (101) comprising an input means (102) for capturing network packets, a processing means (103) for running a packet analyzer for analyzing the network packets whereby packets are classified in request/response pairs per type based on deep packet inspection, and a memory (104) for storing the request/response pairs,
- a means for collecting the request/response pairs and for receiving resource usage information, the means for receiving being an external monitoring system configured for receiving the resource usage information from the at least one server (106) running an agent for transferring the resource usage information to the means for receiving, and a correlation module for correlating the request/response pairs information with the resource usage to an intra-application level, for determining how many resources each type of request uses .

2. A system (100) according to claim 1, whereby the input means (102) captures substantially all network packets of the network traffic and whereby said substantially all network packets are processed by the packet analyzer.

3. A system (100) according to any of the previous claims whereby the network packets first are filtered based on packet information and the packet analyzer only processes the filtered packets.

4. A system (100) according to any of the previous claims whereby only the HTTP packets are passing through the filter, filtering on the TCP port data, and whereby the packet analyzer parses URL and host information from the filtered packets.

5. A system(100) according to any of the previous claims whereby response times of several request of the same type are combined in a latency histogram.

6. A system (100) according to any of the previous claims whereby the packet analyzer processes the packets in order of arrival and/or whereby the packet analyzer processes the packets classifying them according to user defined request types.

7. A system (100) according to any of the previous claims, whereby data in the packets is aggregated and/or whereby the packet analyzer stores only 10-100 requests per second per request type completely for retrieving full url and host information.

8. A system (100) according to any of the previous claims, the system furthermore comprising a monitoring unit for displaying the data center load versus request/response pair rate.

9. A system (100) according to any of the previous claims, the system being implemented as a computing device or the system being implemented as an application.

10. A method (800) for monitoring network traffic and resource usage in a data center comprising at least one server, the method comprising the following steps:
- capturing network packets (810) entering or leaving the data center by an input means (102) of a node (101),
- analyzing of the network packets (830) by a packet analyzer running on a processing means (103) whereby the network packets are classified in request/response pairs per type and this based on deep packet inspection,
- obtaining resource usage (850) information of at least one server (106), said obtaining being receiving in an external monitoring system configured for receiving the resource usage information from the at least one server running an agent for transferring the resource usage information
- correlating (870) the request/response pairs information with the resource usage to an intra-application level, for determining how many resources each type of request uses.

11. A method (800) according to claim 10 whereby in the capturing step (810) all network packets are captured, and whereby in the analyzing step (830) all captured network packets are analyzed.

12. A method according to any of claims 10 to 11 whereby the captured network packets are filtered (820) based on packet information and whereby the packet analyzer only processes the filtered packets (830).

13. A method according to any of claims 10 to 12, whereby only the HTTP packets are passing through the filter in step 820, filtering on the TCP port data, and whereby the packet analyzer parses URL and host information from the filtered packets in step (830) and/or wherein the method includes combining response times of several requests in a latency histogram.

14. A method according to any of the claims 10 to 13 whereby in at least some of the steps the packets are processed in order of arrival.

15. A data carrier comprising a set of instructions for, when executed on a computer, monitoring network traffic and resource usage in a data center according to a method according to any of the claims 10 to 14.

## Patentansprüche

1. System (100) zum Überwachen des Netzwerkverkehrs und der Ressourcennutzung in einem Datenzentrum, das mindestens einen Server umfasst, wobei das System Folgendes umfasst:
- einen Knoten (101), umfassend ein Eingangsmittel (102) zum Erfassen von Netzwerkpaketen, ein Verarbeitungsmittel (103) zum Ausführen eines Paketanalysators zum Analysieren der Netzwerkpakete, wobei Pakete in Anfrage/Antwort-Paare nach Typ basierend auf tiefer Paketinspektion klassifiziert werden, und einen Speicher (104) zum Speichern der Anfrage/Antwort-Paare,
- ein Mittel zum Sammeln der Anfrage/Antwort-Paare und zum Empfangen von Ressourcennutzungsinformationen, wobei das Mittel zum Empfangen ein externes Überwachungssystem ist, das zum Empfangen der Ressourcennutzungsinformationen von dem mindestens einen Server (106) ausgelegt ist, der einen Agenten zum Weiterleiten der Ressourcennutzungsinformationen an das Mittel zum Empfangen ausführt, und ein Korrelationsmodul zum Korrelieren der Informationen der Anfrage/Antwort-Paare mit der Ressourcennutzung auf eine Intra-Anwendungsebene, um zu bestimmen, wie viele Ressourcen jeder Anfragetyp nutzt.

2. System (100) nach Anspruch 1, wobei das Eingangsmittel (102) im Wesentlichen alle Netzwerkpakete des Netzwerkverkehrs erfasst und wobei im Wesentlichen alle Netzwerkpakete vom Paketanalysator verarbeitet werden.

3. System (100) nach einem der vorhergehenden Ansprüche, wobei die Netzwerkpakete erst basierend auf Paketinformationen gefiltert werden und der Paketanalysator nur die gefilterten Pakete verarbeitet.

4. System (100) nach einem der vorhergehenden Ansprüche, wobei nur die HTTP-Pakete den Filter passieren, der am TCP-Port Daten filtert, und wobei der Paketanalysator URL- und Host-Informationen aus den gefilterten Paketen analysiert.

5. System (100) nach einem der vorhergehenden Ansprüche, wobei Antwortzeiten von mehreren Anfragen des gleichen Typs in einem Latenz-Histogramm kombiniert werden.

6. System (100) nach einem der vorhergehenden Ansprüche, wobei der Paketanalysator die Pakete in der Reihenfolge ihrer Ankunft verarbeitet und/oder wobei der Paketanalysator die Pakete verarbeitet, indem sie nach benutzerdefinierten Anfragetypen klassifiziert werden.

7. System (100) nach einem der vorhergehenden Ansprüche, wobei Daten in den Paketen vereinigt werden und/oder wobei der Paketanalysator nur 10-100 Anfragen pro Sekunde pro Anfragetyp vollständig zum Abrufen voller URL- und Host-Informationen speichert.

8. System (100) nach einem der vorhergehenden Ansprüche, wobei das System ferner eine Überwachungseinheit zum Anzeigen der Datenzentrumslast gegenüber dem Anfrage/Antwort-Paar-Verhältnis umfasst.

9. System (100) nach einem der vorhergehenden Ansprüche, wobei das System als Rechengerät implementiert wird oder das System als Anwendung implementiert wird.

10. Verfahren (800) zum Überwachen des Netzwerkverkehrs und der Ressourcennutzung in einem Datenzentrum, das mindestens einen Server umfasst, wobei das Verfahren die folgenden Schritte umfasst:
- Erfassen von Netzwerkpaketen (810), die in das Datenzentrum durch ein Eingangsmittel (102) eines Knotens (101) eingehen oder es verlassen,
- Analysieren der Netzwerkpakete (830) durch einen Paketanalysator, der auf einem Verarbeitungsmittel (103) ausgeführt wird, wobei die Netzwerkpakete in Anfrage/Antwort-Paare nach Typ und dies basierend auf tiefer Paketinspektion klassifiziert werden,
- Erhalten von Ressourcennutzungsinformationen (850) von mindestens einem Server (106), wobei das Erhalten das Empfangen in einem externen Überwachungssystem ist, das zum Empfangen der Ressourcennutzungsinformationen von dem mindestens einen Server ausgelegt ist, der einen Agenten zum Weiterleiten der Ressourcennutzungsinformationen ausführt,
- Korrelieren (870) der Informationen der Anfrage/Antwort-Paare mit der Ressourcennutzung auf eine Intra-Anwendungsebene, um zu bestimmen, wie viele Ressourcen jeder Anfragetyp nutzt.

11. Verfahren (800) nach Anspruch 10, wobei im Erfassungsschritt (810) alle Netzwerkpakete erfasst werden, und wobei im Analysierschritt (830) alle erfassten Netzwerkpakete analysiert werden.

12. Verfahren nach einem der Ansprüche 10 bis 11, wobei die erfassten Netzwerkpakete basierend auf Paketinformationen gefiltert (820) werden und wobei der Paketanalysator nur die gefilterten Pakete verarbeitet (830).

13. Verfahren nach einem der Ansprüche 10 bis 12, wobei nur die HTTP-Pakete den Filter in Schritt 820 passieren, der am TCP-Port Daten filtert, und wobei der Paketanalysator URL- und Host-Informationen aus den in Schritt (830) gefilterten Paketen analysiert und/oder wobei das Verfahren das Kombinieren von Antwortzeiten von mehreren Anfragen in einem Latenz-Histogramm umfasst.

14. Verfahren nach einem der Ansprüche 10 bis 13, wobei in mindestens einigen der Schritte die Pakete in der Reihenfolge ihrer Ankunft verarbeitet werden.

15. Datenträger, umfassend eine Reihe von Anweisungen, um, bei Ausführung auf einem Computer, den Netzwerkverkehr und die Ressourcennutzung in einem Datenzentrum gemäß einem Verfahren nach einem der Ansprüche 10 bis 14 zu überwachen.

## Revendications

1. Un système (100) de surveillance de trafic de réseau et d'utilisation de ressources dans un centre de données comprenant au moins un serveur, le système comprenant :
- un noeud (101) comprenant un moyen d'entrée (102) destiné à la capture de paquets de réseau, un moyen de traitement (103) destiné à l'exécution d'un analyseur de paquets destiné à l'analyse des paquets de réseau grâce à quoi les paquets sont classés en paires demande/réponse par type en fonction d'une inspection approfondie de paquets, et une mémoire (104) destinée à la conservation en mémoire des paires demande/réponse,
- un moyen du recueil des paires demande/réponse et de réception d'informations d'utilisation de ressources, le moyen de réception étant un système de surveillance externe configuré de façon à recevoir les informations d'utilisation de ressources à partir du au moins un serveur (106) exécutant un agent destiné au transfert des informations d'utilisation de ressources vers le moyen de réception, et un module de corrélation destiné à la corrélation des informations de paires demande/réponse avec l'utilisation de ressources à un niveau intra-application pour la détermination du nombre de ressources que chaque type de demande utilise.

2. Un système (100) selon la Revendication 1, où le moyen d'entrée (102) capture sensiblement la totalité des paquets de réseau du trafic de réseau et où ladite sensiblement totalité des paquets de réseau est traitée par l'analyseur de paquets.

3. Un système (100) selon l'une quelconque des Revendications précédentes où les paquets de réseau sont d'abord filtrés en fonction d'informations de paquet et l'analyseur de paquets traite uniquement les paquets filtrés.

4. Un système (100) selon l'une quelconque des Revendications précédentes où uniquement les paquets HTTP passent au travers du filtre, qui filtre les données de port TCP, et où l'analyseur de paquets analyse des informations d'URL et d'hôte à partir des paquets filtrés.

5. Un système (100) selon l'une quelconque des Revendications précédentes où des temps de réponse de plusieurs demandes du même type sont combinées en un histogramme de latence.

6. Un système (100) selon l'une quelconque des Revendications précédentes où l'analyseur de paquets traite les paquets dans l'ordre d'arrivée et/ou où l'analyseur de paquets traite les paquets en les classant en fonction de types de demande définis par l'utilisateur.

7. Un système (100) selon l'une quelconque des Revendications précédentes, où les données dans les paquets sont agrégées et/ou où l'analyseur de paquets conserve en mémoire uniquement de 10 à 100 demandes par seconde par type de demande intégralement de façon à récupérer l'intégralité des informations d'URL et d'hôte.

8. Un système (100) selon l'une quelconque des Revendications précédentes, le système comprenant en outre une unité de surveillance destinée à l'affichage de la charge du centre de données versus le débit des paires demande/réponse.

9. Un système (100) selon l'une quelconque des Revendications précédentes, le système étant mis en oeuvre sous la forme d'un dispositif informatique ou le système étant mis en oeuvre sous la forme d'une application.

10. Un procédé (800) de surveillance de trafic de réseau et d'utilisation de ressources dans un centre de données comprenant au moins un serveur, le procédé comprenant les opérations suivantes :
- la capture de paquets de réseau (810) qui entrent dans ou sortent du centre de données par un moyen d'entrée (102) d'un noeud (101),
- l'analyse des paquets de réseau (830) par un analyseur de paquets exécuté sur un moyen de traitement (103) où les paquets de réseau sont classés en paires demande/réponse par type et ceci en fonction d'une inspection approfondie de paquets,
- l'obtention d'informations d'utilisation de ressources (850) d'au moins un serveur (106), ladite obtention étant la réception dans un système de surveillance externe configuré de façon à recevoir les informations d'utilisation de ressources à partir du au moins un serveur exécutant un agent destiné au transfert des informations d'utilisation de ressources,
- la corrélation (870) des informations de paires demande/réponse avec l'utilisation de ressources à un niveau intra-application pour la détermination du nombre de ressources que chaque type de demande utilise.

11. Un procédé (800) selon la Revendication 10 où, dans l'opération de capture(810), la totalité des paquets de réseau sont capturés, et où dans l'opération d'analyse (830) la totalité des paquets de réseau capturés sont analysés.

12. Un procédé selon l'une quelconque des Revendications 10 à 11 où les paquets de réseau capturés sont filtrés (820) en fonction d'informations de paquet et où l'analyseur de paquets traite uniquement les paquets filtrés (830).

13. Un procédé selon l'une quelconque des Revendications 10 à 12, où uniquement la paquets HTTP passent au travers du filtre à l'opération 820, qui filtre les données de port TCP, et où l'analyseur de paquets analyse les informations d'URL et d'hôte à partir des paquets filtrés à l'opération (830) et/ou où le procédé comprend la combinaison de temps de réponse de plusieurs demandes dans un histogramme de latence.

14. Un procédé selon l'une quelconque des Revendications 10 à 13 où, dans au moins certaines des opérations, les paquets sont traités dans l'ordre d'arrivée.

15. Un support de données contenant un ensemble d'instructions destinés à, lorsqu'elles sont exécutées sur un ordinateur, la surveillance de trafic de réseau et d'utilisation de ressources dans un centre de données conformément à un procédé selon l'une quelconque des Revendications 10 à 14.
